# EUROPEAN PATENT APPLICATION

(11) **EP 4 678 136 A2**
(43) Date of publication of application: **14.01.2026**
(21) Application number: 25210202.5
(22) Date of filing: 25.01.2021
(51) Int. Cl.: A61C 5/77

(54) **DENTAL RESTORATION SYSTEM AND METHOD OF BUILDING A RESTORATION**

(30) Priority: 24.01.2020 EP 20153526
(62) Divisional of application: 21701983.5
(71) Applicant: Institut Straumann AG, 4052 Basel (CH)
(72) Inventor: FISCHLER, Felix, 68220 Hagenthal le Haut (FR)
(74) Representative: Michalski Hüttermann & Partner Patentanwälte mbB

(57) **Abstract**

The invention concerns a dental restoration system (1) for restoring a tooth at least during healing of an implant construction (5) being set into a jaw of a patient, comprising a crown abutment (3) configured to be positioned on a gingiva former (4) mounted to the implant construction (5), and a locking member (2) having a contact face (212) and a fixing structure (24) configured to be fixed to the gingiva former (4), wherein the crown abutment (3) has a through hole (31) configured to receive the locking member (2) such that the contact face (212) of the locking member (2) contacts the crown abutment (3) and the fixing structure (24) at least partially extends out of the crown abutment (3), and the crown abutment (3) is made of an abutment material configured to bond with a crown material used to build a crown (6).

## Description

### Technical Field

The present invention relates to a dental restoration system and a method of building a dental restoration. Such systems and methods can be used to replace a tooth or plural teeth during healing of one or more dental implants after being set into a jaw of a patient.

### Background Art

Today, implant-supported dental prostheses often are the treatment of choice when a patient needs to have one tooth or a multiplicity of teeth substituted in a way that the outcome is a natural-feeling, stable restoration, especially if certain clinical conditions, such as healthy underlying bone and soft tissue structures, are to meet.

Dental implants normally take the form of threaded elements which are engineered to be placed into a jaw of a patient. Implant placement typically requires the opening of gingiva flaps in order to better access the implantation area. Irrespective of whether a submucosal approach or a transmucosal approach is followed, that is of whether a double-staged surgical intervention or a single-stage flap-opening is performed on the soft tissue of the gingiva, a so-called healing cap or healing abutment, also more generally designated as gingiva former, is typically mounted to the inserted implant. The function of the healing cap or abutment is to preserve and retain in place the gingival tissue in the implantation site, i.e., in the area around the socket of the missing tooth, thereby preserving an anatomic emergence profile.

The temporary use of healing caps or gingiva formers is intended to create the wished shape of emergence profile deemed suitable for the given patient situation. Such shaping of the gingiva is also summarized, in the technical filed of implantology, as soft tissue conditioning.

Typically, in dental restoration treatments, further processes or steps in addition to implant healing and soft tissue conditioning are involved. For example, it is often desired to design and build the dental restoration in accordance with the given situation in a patient's mouth. For that purpose, either the situation at hand is scanned by an intra oral scanner or a model casting by means of an impression taken in the mouth is made.

Also, usually during the healing of the implant into the bone it is required to prevent stressing the implant such that proper healing of the implant is possible. More specifically, for allowing a proper healing of the implant into jaw it is required that the load or mechanical stress applied to the implant does not exceed a certain extent. At the same time, during healing of the implant, which may take several months, patient should bite as normal as possible in order to prevent collateral damages such as stressing other teeth or the like. Also, during chewing the gap can be stressed by food or other parts moved into the gap. This may cause the gingiva or the implant to be affected as by inflammation such that impaired healing may occur.

Furthermore, building a dental restoration on an abutment such as on a temporary abutment often is difficult or time-consuming. Typically, the building up of the dental restoration requires removing and eventually re-mounting the healing cap which may cause stress to the soft tissue and may also affect the healing of the implant into the jaw. This is particularly the case since the healing cap or abutment typically is grabbed from outside to remove it such that - to a certain extent - the soft tissue around the healing cap or abutment has to be removed, shifted or lifted. In each removal and re-mounting there is a risk of injuring the gingiva and/or of weakening or repositioning the implant-jaw connection.

EP 1967158 A1 describes a dental implant for supporting a coronal component, said implant comprising a fixture part forming an apical bone contact part of said implant, an abutment part forming a coronal component support part of said implant, and an abutment screw, wherein said abutment part is arranged to, in an assembled state of said dental implant, be fixed to said fixture part by said abutment screw, and wherein a coronal end portion of said abutment screw is arranged to, in said assembled state, be positioned coronally of a coronal end portion of said abutment part.

US 2008/206709 A1 describes a sleeve for use as a gingival abutment in the dental industry and methods for using and making the sleeve are disclosed. The sleeve has a sleeve body with a distal end and a proximal end with a sidewall extending therebetween defining a sleeve interior. The sidewall of the sleeve has an exterior surface at least a portion of which substantially corresponds to a natural tooth profile.

Therefore, there is a need for a system or method allowing a gentle handling of the soft tissue and implanting situation during healing of the implant and building a dental restoration.

### Disclosure of the Invention

The invention is defined by the features of the independent claims. Preferred embodiments are subject of the dependent claims.

In particular, in one aspect the invention is a dental restoration system for restoring a tooth at least during healing of an implant construction being set into a jaw of a patient, comprising a crown abutment and a locking member. The crown abutment is configured to be positioned on a gingiva former mounted to the implant. The locking member has a contact face and a fixing structure configured to be fixed to the gingiva former. The crown abutment has a through hole configured to receive the locking member such that the contact face of the locking member contacts the crown abutment and the fixing structure at least partially extends out of the crown abutment. The crown abutment is made of an abutment material configured to bond with a crown material used to build a crown.

The dental restoration system can be a temporary dental restoration system. In particular, the dental restoration system can be configured to be temporary replacing a tooth or plural teeth during healing of the implant into the jaw of the patient. The time involved for complete healing of the implant can be plural months such as between about three months to about ten months.

The dental restoration system can be embodied for replacing a single tooth or a plurality of teeth. Thus, it can have or be combined with a crown-like or bridge-like structure.

The gingiva former can be a healing abutment to be positioned directly on the implant and fixed thereto. More specifically, in the context of the present invention, the term "gingiva former" relates to an element or device designed to be arranged onto an implant construction during healing, after insertion of the implant construction, for the purpose of soft tissue conditioning. For example, it can be essentially cylindrical or regularly shaped. However, more advantageously, it can be shaped to reflect the form of the gingiva channel through which the implant construction is inserted after surgical opening of a flap in the gingiva. Possible types of gingiva formers include healing caps, healing abutments and similar elements.

The implant construction can comprise one or more implants in the more literal sense being a post-like or screw-like element inserted as artificial root into the jaw bone. It can also comprise an abutment or base affixed to the implant or fixed to at least one remainder of an original tooth. For instance, the implant construction can comprise a base abutment, e.g. in titanium, which is designed to be placed onto an implant to provide support for dental restorations, or prosthetic reconstructions, such as crowns or bridges.

The term "dental restoration" in context of the present invention relates to a structure that comprises a visible portion extending into the oral cavity such as one or plural artificial teeth. The term covers crowns, bridges and the like, as well as also similar restorations. The dental restoration typically is individually formed in consideration of the situation give in the oral cavity where it will be placed. Thus, the restoration in accordance with the invention can particularly be a patient specific individual restoration.

The term "crown" as used herein usually relates to an artificial dental crown. Thereby, as a part of the dental restoration, the crown typically is or comprises the visible part of the tooth extending into the oral cavity. Typically, the crown is an artificial tooth part for replacing the natural crown of one single tooth. However, the term may also cover embodiments which replace natural crowns of plural teeth.

The term "jaw" is understood herein as comprising the jaw bone, the associated soft tissue as well as the teeth together with the roots.

The locking member advantageously is substantially post shaped. The fixing structure can comprise a thread, e.g., located around the post shape. Thereby, the locking member can be a locking screw or a similar screw like construction.

Being particularly configured to be positioned on and fixed to the gingiva former, the crown abutment can be suitable for a temporary restoration during healing of the implant. Thereby, by being made of the abutment material specifically configured to bond with the crown material used to build the crown, the crown abutment allows for efficiently forming the crown or dental restoration directly on the crown abutment. Like this, the dental restoration or crown can efficiently be created on the dental abutment while the latter is connected to the implant construction and without requiring removal of the crown abutment. This allows the dental restoration to be gently formed without inappropriately stressing the implant or any surrounding tissue during healing.

Furthermore, by the crown abutment being suitable for directly forming the crown on it, a particularly precise shaping of the crown can be achieved such that the dental restoration or crown can specifically be embodied to reduce stress on the implant. In particular, the invention allows for efficiently and accurately building a temporary restoration in which the specific needs during healing of the implant can be considered.

Thus, the system according to the invention allows for a gentle handling of the soft tissue and implanting situation during healing of the implant and during building the dental restoration or crown.

The term "bond" in connection with the abutment material and the crown material relates to a fixed connection between the crown abutment and the crown. The fixed connection can particularly be a cohesive and/or a bonded connection which can be created by an exogenous energy input such as light or ultrasonic sound. Thereby, the term particularly covers adhering or partially melting the crown and abutment material. In particular, when bonding the abutment material and the crown material may directly interact such that no additional adhesive is necessary for connecting the crown abutment and the crown. More specifically, the crown can be formed, e.g. layer by layer, directly on the crown abutment. At the end of forming the crown, the crown abutment and the crown can be monolithic and irreversibly connected.

For initiating the bonding process to connect the crown material to the abutment material, provision of an activation energy may be required. For example, such activation may be triggered by heat or, more advantageously for application directly in a mouth of the patient, by light.

The crown material can be light curable and the abutment material can be configured such that the crown material can be cured directly on the crown abutment. Like this, the crown can be created or formed on the crown abutment by a technique, i.e. including light curing, known and well established by dentists. Preferably, the crown material is a composite material and, more preferably, a resin based composite material. Such composite materials may have appropriate properties for building crowns. Beyond others, the can be flexibly formed before being cured, the can efficiently be cured, e.g. by light, they can be sufficiently hard after curing and the can be biocompatible allowing application in the mouth of the patient.

Advantageously, the dental restoration system comprises the crown material. For example, the crown material can be provided in a paste like form to be applied by a practitioner or dentist directly on the crown abutment. Like this, it can be assured that the crown material and abutment material suit each other such that an appropriate bonding can be achieved.

In a preferred embodiment, the dental restoration system comprises a pin, wherein the pin has a fixing structure corresponding to the fixing structure of the locking member, and the pin is configured to extend through the through hole of the crown abutment and to project above the crown abutment when the crown abutment is positioned on the gingiva former and the fixing structure of the pin engages the gingiva former. Thereby, the pin preferably is made of a pin material configured not to bond with the crown material used to build the crown.

The pin is provided to extend through the through hole of the crown abutment and to be fixed to the gingiva former while building the crown on the crown abutment. Like this, the through hole of the crown abutment can efficiently be kept free from crown material. Additionally, since the pin projects above the crown abutment when being fixed to the gingiva former, a straight channel can be formed in the crown. Thus, after building the crown it is provided with the channel through which the through hole of the crown abutment is accessible. The channel and the through hole form one single passage into which the locking member can be provided for mounting the crown together with the crown abutment to the gingiva former.

Thus, in an advantageous embodiment, the dental restoration system comprises the crown material to build-up the crown, wherein the pin material is configured not to bond with the crown material and the abutment material is configured to bond with the crown material when building the crown.

Particularly, when the crown is directly formed on the crown abutment such that crown and crown abutment form one unit, forces applied to the crown may directly pass via the gingiva former to the implant construction. This may cause stress to the healing of the implant into the jaw bone such that, e.g., stability or tolerability of the implant construction in the jaw can be impaired. For addressing this, the locking member preferably has a breaking structure configured to break upon a predefined threshold load applied to the crown abutment when the locking member fixes the crown abutment to the gingiva former.

The threshold load can particularly be related to a force or load applied to the crown and the crown abutment when being fixed to the implant construction by means of the locking member. Thereby, the breaking structure allows for preventing that a load higher than the predefined threshold load is applied to the implant construction during healing. Like this, it can be prevented that the healing process is stopped or affected by mechanical stress applied via the crown abutment and the gingiva former. This can be particularly beneficial in the context of the crown being directly formed on the crown abutment such that forces may be directly transferred.

Thereby, preferably the locking member has a mounting tool geometry configured to be connected to a mounting tool for fixing the locking member to the gingiva former, the mounting tool geometry is located on a first side of the breaking structure, the locking member has an auxiliary tool geometry configured to be connected to a demounting tool for demounting the locking member from the gingiva former when the breaking structure is broken, and the auxiliary tool geometry is located on another second side of the breaking structure opposite to the first side of the breaking structure.

The mounting tool geometry can be located at or near an oral end of the locking member. Thereby, the term "oral" relates to an end side or direction towards the oral cavity of the patient. It can particularly be opposite to an apical end side or apical direction.

The mounting tool geometry can be any structure allowing the mounting tool to engage the locking member for fixing the locking member to the gingiva former. The mounting tool geometry can be a screw head like portion having a recess corresponding to a shape of a portion of the mounting tool to be connected to the locking member. Like this, the mounting tool geometry can be embodied as a female engaging part. Also, the shape of the recess can suit to the shape of standard mounting tools.

The auxiliary tool geometry can be any structure allowing the demounting tool to engage the locking member for demounting the locking member once its braking structure is broken. The demounting tool geometry can be a screw head like portion having an outer shape corresponding to the shape of the demounting tool to be connected. Like, this the auxiliary tool geometry can be embodied as a male engaging portion. Also, the outer shape can suit to the shape of a standard demounting tool.

By providing two separate tool geometries, i.e. the mounting tool geometry and the auxiliary tool geometry, it can be achieved that an appropriate regular mounting and demounting is possible through the through hole of the crown abutment, and more specifically, an appropriate demounting still is possible once the locking member is broken due to excessive load. In particular, after breaking of the locking member, the crown together with the crown abutment and a portion of the locking member will be removed. The auxiliary tool geometry now still allows that the gingiva former can be released and removed from the implant construction without requiring cumbersome cutting or drilling or other material removing processes for taking off the gingiva former.

Thereby, the locking member preferably is arranged such that the breaking structure is located apically from the mounting tool geometry, the auxiliary tool geometry is located apically from the breaking structure, and the fixing structure is located apically from the auxiliary tool geometry. Like this, it can efficiently be achieved that the auxiliary tool geometry remains accessible after breaking of the locking member. Thus, the portion of the locking member still being connected to the implant construction after breaking of the locking member, can properly be released such that the gingiva formed can safely be demounted from the implant construction.

Preferably, the breaking structure of the locking member comprises a weakened section having a reduced diameter compared to other sections of the locking member. Such reduced diameter weakened section allows for precisely defining the threshold load which limits the maximum load applied to the implant construction.

Additionally or alternatively, the breaking structure of the locking member preferably is made of a weaker material compared to other sections of the locking member. The weaker material can be a material literally different from the material of the other sections of the locking member. It can also generally or chemically be the same material which is differently structured. For example, the weaker material can be the same material as the material of the other sections but being provided with pores or similar cavities/openings for achieving a weaker construction.

Instead of a gingiva former can be used together with the crown abutment. Thereby, the dental restoration can be intended for permanent or temporary restoration.

Preferably the dental restoration system comprises a gingiva former having an implant structure configured to arrange the gingiva former on the implant construction set into the jaw of the patient, and an emergence profile portion configured to be positioned within a gingiva of the patient when the gingiva former is mounted to the implant construction. By including the gingiva former into the dental restoration system it can be specifically be designed to suit to the system.

Thereby, the gingiva former preferably has a mounting structure corresponding to the fixing structure of the locking member. For example, mounting structure can be embodied as a socket having an inner thread and the fixing structure of the locking member can be embodied as corresponding post having an outer thread. Like this, the locking member can efficiently be connected to the gingiva former.

In another aspect, the invention is a method of building a restoration on an implant construction set into a jaw of a patient. The method comprises the steps of: mounting a gingiva former to the implant construction; positioning a crown abutment on the gingiva former, wherein the crown abutment has a through hole configured to receive a locking member such that the contact face of the locking member contacts the crown abutment and a fixing structure of the locking member at least partially extends out of the crown abutment to the gingiva former; arranging a pin with a fixing structure corresponding to the fixing structure of the locking member into the though hole of the crown abutment such that the pin extends through the through hole of the crown abutment, the fixing structure of the pin engages the gingiva former, and the pin projects above the crown abutment; building-up a crown with a crown material adhering to the crown abutment and not adhering to the pin, such that a monolithic crown including the crown abutment is formed; removing the pin such that a through hole is provided in the crown; and fixing the crown to the gingiva former by means of a locking member having a contact face and a fixing structure configured to be fixed to the gingiva former, wherein the locking member is received in the through hole of the crown abutment such that the contact face of the locking member contacts the crown abutment and the fixing structure engages the gingiva former. The restoration can particularly be a temporary restoration.

The method according to the invention and its preferred embodiments described below allow to implement and achieve the effects and benefits described above in connection with the dental restoration system according to the invention and its preferred embodiments described above.

Preferably, the locking member has a breaking structure configured to break upon a predefined threshold load applied to the crown when the locking member fixes the crown to the gingiva former.

Preferably, the crown is build-up at a smaller dimension as a tooth to be temporarily replaced by the crown. Such undersizing of the crown allows for reducing the load or force acting on the crown when being used such that mechanical stress of the implant construction can be reduced during healing. In particular, the crown can be undersized to an extent that chewing is still possible without substantial limitation but such that the load or stress applied is sufficiently reduced.

### Brief Description of the Drawings

The dental restoration system according to the invention and the method of building a restoration on an implant construction according to the invention are described in more detail herein below by way of exemplary embodiments and with reference to the attached drawings, in which:
Fig. 1 shows an exploded view of an embodiment of dental restoration system according to the invention;
Fig. 2 shows a side view of the dental restoration system of Fig. 1 in a partly assembled state;
Fig. 3 shows a cross-sectional view of the dental restoration system of Fig. 1 in a fully assembled state;
Fig. 4 shows a side view of the dental restoration system of Fig. 1 with a pin;
Fig. 5 shows a perspective view of Fig. 4; and
Fig. 6 shows a cross-sectional view of Fig. 4.

### Description of Embodiments

In the following description certain terms are used for reasons of convenience and are not intended to limit the invention. The terms "right", "left", "up", "down", "under" and "above" refer to directions in the figures. The terminology comprises the explicitly mentioned terms as well as their derivations and terms with a similar meaning. Also, spatially relative terms, such as "beneath", "below", "lower", "above", "upper", "proximal", "distal", and the like, may be used to describe one element's or feature's relationship to another element or feature as illustrated in the figures. These spatially relative terms are intended to encompass different positions and orientations of the devices in use or operation in addition to the position and orientation shown in the figures. For example, if a device in the figures is turned over, elements described as "below" or "beneath" other elements or features would then be "above" or "over" the other elements or features. Thus, the exemplary term "below" can encompass both positions and orientations of above and below. The devices may be otherwise oriented (rotated 90 degrees or at other orientations), and the spatially relative descriptors used herein interpreted accordingly. Likewise, descriptions of movement along and around various axes includes various special device positions and orientations.

To avoid repetition in the figures and the descriptions of the various aspects and illustrative embodiments, it should be understood that many features are common to many aspects and embodiments. Omission of an aspect from a description or figure does not imply that the aspect is missing from embodiments that incorporate that aspect. Instead, the aspect may have been omitted for clarity and to avoid prolix description. In this context, the following applies to the rest of this description: If, in order to clarify the drawings, a figure contains reference signs which are not explained in the directly associated part of the description, then it is referred to previous or following description sections. Further, for reason of lucidity, if in a drawing not all features of a part are provided with reference signs it is referred to other drawings showing the same part. Like numbers in two or more figures represent the same or similar elements.

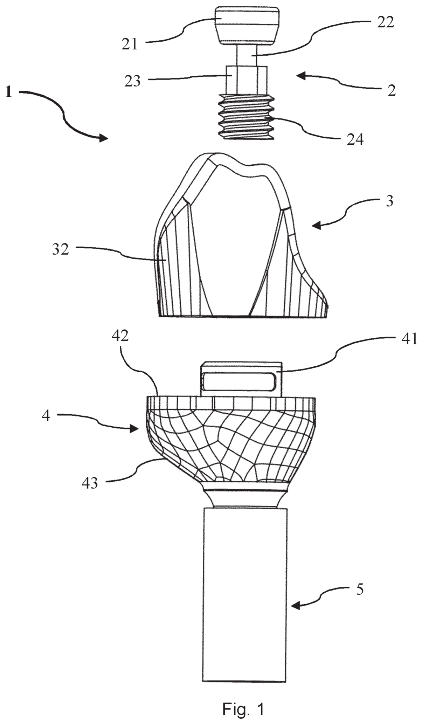

Fig. 1 shows an exploded view of an embodiment of a dental restoration system 1 for restoring a tooth during healing of an implant 5 set into a jaw of a patient. The dental restoration system 1 comprises a healing abutment 4 as gingiva former, a temporary crown abutment 3 and a crown screw 2 as locking member. The healing abutment 4 is formed with an emergence profile 43 for soft tissue conditioning or shaping a gingiva. More specifically, the emergence profile 43 of the gingiva former is configured to prepare and form the gingiva during healing of the implant 5 into the jaw after being set into the jaw. The healing abutment 4 is mounted to the implant 5, which is schematically depicted in the Figs as a block.

At its top or occlusal end, the healing abutment 4 has a flat abutment platform 42 for supporting a body 32 of the temporary crown abutment 3. From the abutment platform 42 an indexing knob 41 occlusally or upwardly projects. The indexing knob 41 is configured to define an orientation and location of the crown abutment 3 when being mounted to the healing abutment 4 as described in more detail below.

The crown screw 2 has - top down - a screw head 21, a breaking post 22 as weakened section of a breaking structure, a hex head 23 as auxiliary tool geometry and a thread portion 24 as fixing structure. The breaking post 22 is shaped as a cylinder with a reduced diameter compared to the other portions of the crown screw 2. It is located in between the screw head 21 and the hex head 23. By having the reduced diameter, the breaking post 22 is less resistant to a load or force applied to the crown screw 2. Thus, the breaking post 22 defines a maximum load or threshold the crown screw 2 can resist. If the crown screw 2 is exposed to a load exceeding the threshold, the breaking post 22 will break apart. Thereby, the hex head 23 is exposed such that it is accessible to a hex screw tool. The thread portion 24 is embodied as a cylinder having a larger diameter than the breaking post 22. The outer circumference of the cylinder of the thread portion 24 is equipped with an outer thread.

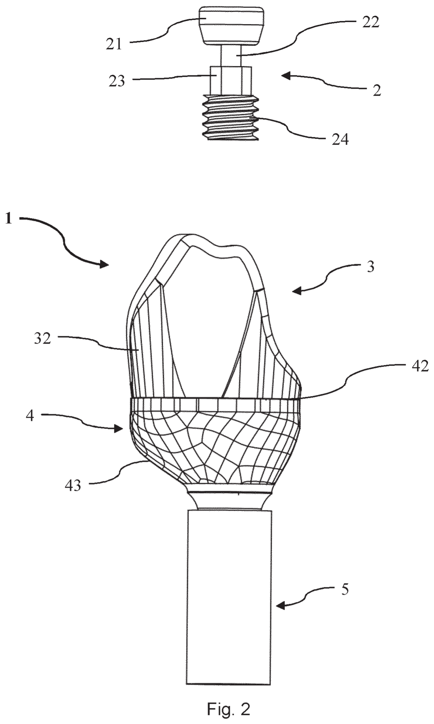

In Fig. 2, the dental restoration system 1 is shown, with the crown abutment 3 being positioned on the healing abutment 4 such that its flat lower end abuts the abutment platform 42 of the healing abutment 4. Thereby, the indexing knob 41 together with a corresponding cavity of the crown abutment 3 ensures a correct positioning of the crown abutment 3 on the abutment platform 42 and a correct rotational orientation of the crown abutment 3 relative to the healing abutment 4 and the implant 5.

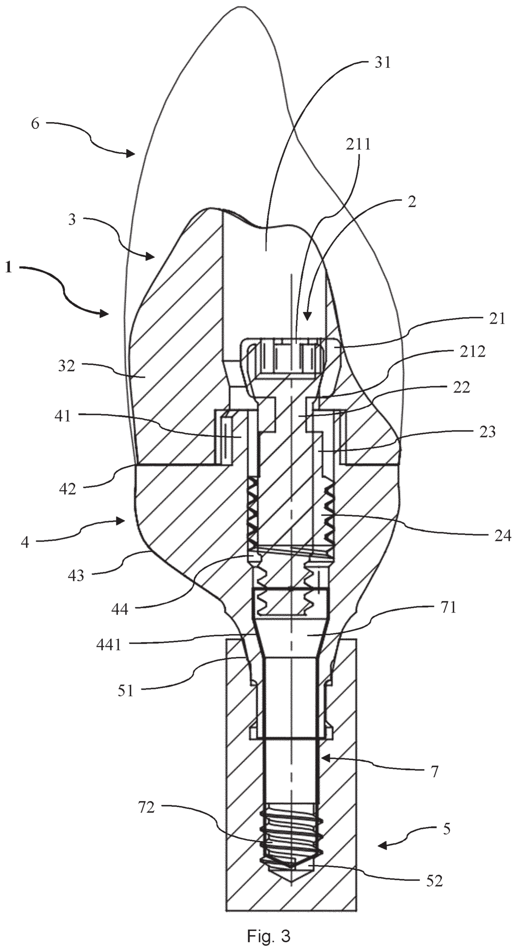

Fig. 3 show a cross sectional view of the dental restoration system 1 in an assembled state. Thereby, it can be seen that the gingiva former 3 is fixed to the implant 5 by means of an implant screw 7 having a top head with a lower pressure applying conus 71 and a bottom thread portion 72. The implant 5 has a central vertical blind hole with a gingiva former socket section 51 at the top and a screw socket section 52 at the bottom. The healing abutment 4 is seated in the blind hole of the implant 5 such that a lower end of the healing abutment 4 is located in the gingiva former socket section 51 of the implant 5.

The healing abutment 4 has a vertical central bore 44 which extends through the complete healing abutment 4 and which is equipped with a pressure receiving conus 411 . The implant screw 7 is positioned in the healing abutment 4 such that the head is located inside the bore 44 and the thread portion 72 extends out of the healing abutment 4. More specifically, the implant screw 7 is screwed into the blind hole of the implant 5, wherein the thread portion 72 engages the screw socket section 52. Thereby, the pressure applying conus 71 of the implant screw 7 is pressed against the pressure receiving section 411 of the healing abutment 4 such that the healing abutment 4 is rigidly fixed to the implant 5.

The crown abutment 3 has a through hole 31 configured to receive the locking screw 2. The locking screw 2 is located in the though hole 31 such that a bottom face 211 of its head 21 abuts the crown abutment 3, thereby forming a contact face. The thread portion 24 downwardly projects out of the crown abutment 3 and extends into the bore 44 of the healing abutment 4. More specifically, the thread portion 24 engages a corresponding internal thread formed in the bore 44. Thereby, the bottom face 211 of the head 21 is pressed to the crown abutment 3 such that the crown abutment 3 is safely fixed to the healing abutment 4. On top of the crown abutment 3 a crown 6 is formed in accordance with an embodiment of the method according to the invention as follows:

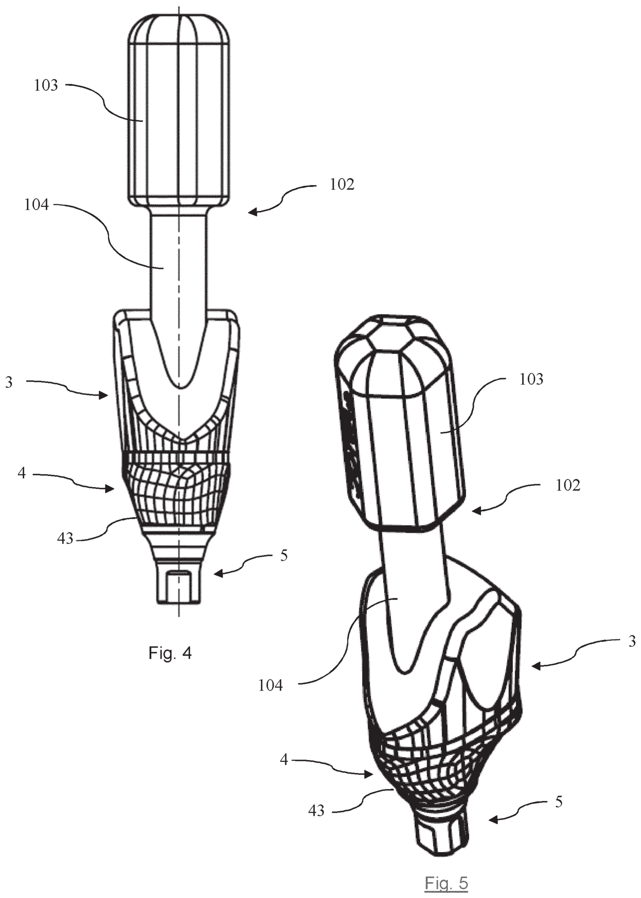

The healing abutment 4 is mounted to the implant 5 and the crown abutment 3 is positioned on the healing abutment 4 as described above. However, as shown in Figs. 4 to 6, before inserting the locking screw 2, a pin 102 having a fixing structure 124 corresponding to the thread portion 24 of the locking screw 2 is provided into the though hole 31 of the crown abutment 3 such that it extends through the through hole 31 and engages the healing abutment 4. Thereby, the pin 102 projects above the crown abutment 2.

Then, a resin based composite material is obtained as crown material. The crown abutment 3 is made of an abutment material which is configured to bond with the resin based composite material. In contrast, the pin 102 is made of a pin material which is configured not to bond with the resin based composite material.

By building-up layer by layer of the composite material onto the crown abutment 3, the crown 6 is formed in accordance with a natural tooth to be restored. Thereby, the crown material bonds with the composite material such that crown abutment 3 and crown 6 are monolithically formed as one single piece. Compared to the natural tooth to be restored, the crown 6 is undersized a little.

After building-up the crown 6, the pin 102 is removed from the healing abutment 4 such that a through hole is provided into the crown 6 through which the through hole 31 of the crown abutment 3 is accessible.

Figs. 4 and 5 show the pin 102 being arranged in the through hole 31 of the crown abutment 31 which in turn is set on the healing abutment 4. The pin 102 has a rod element 104 that extends through the through hole 31. The rod element 104 serves as a place holder or mould for forming the through hole in the crown 6 such that a continuous through hole through the crown 6, the crown abutment 3 as well as the healing abutment 4 is established. The pin 102 further has a handle 103 that can be used to mount the pin 102 and to adjust the position and orientation of the pin 102, thereby facilitating the arrangement of the pin 102 and increasing accuracy of when forming the through hole.

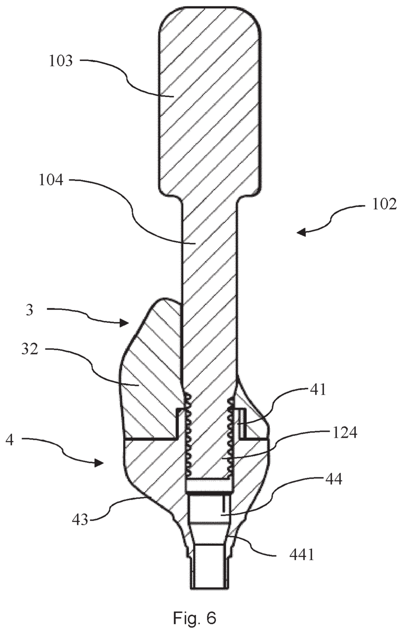

Fig. 6 shows that the pin 102 has the fixing structure 124 in the same form as the thread portion 24 of the locking screw 2. After forming of the through hole, the pin 102 is removed. Since the pin 102 is made of a pin material that does not bond with the crown material, there is no residue when removing the pin 102 and a properly dimensioned and oriented through hole is created in the crown 6. Flence, the through hole in the crown 6 can be formed with a comparably higher accuracy.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative or exemplary and not restrictive. Various mechanical, compositional, structural, electrical, and operational changes may be made without departing from the scope of this description and the claims. In some instances, well-known circuits, structures and techniques have not been shown in detail in order not to obscure the invention. Thus, it will be understood that changes and modifications may be made by those of ordinary skill within the scope of the following claims. In particular, the present invention covers further embodiments with any combination of features from different embodiments described above and below.

The disclosure also covers all further features shown in the Figs individually although they may not have been described in the afore or following description. Also, single alternatives of the embodiments described in the figures and the description and single alternatives of features thereof can be disclaimed from the subject matter of the invention or from disclosed subject matter. The disclosure comprises subject matter consisting of the features defined in the claims or the exemplary embodiments as well as subject matter comprising said features.

Furthermore, in the claims the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. The terms "essentially", "about", "approximately" and the like in connection with an attribute or a value particularly also define exactly the attribute or exactly the value, respectively. The term "about" in the context of a given numerate value or range refers to a value or range that is, e.g., within 20%, within 10%, within 5%, or within 2% of the given value or range. Components described as coupled or connected may be electrically or mechanically directly coupled, or they may be indirectly coupled via one or more intermediate components. Any reference signs in the claims should not be construed as limiting the scope.

## Claims

1. A dental restoration system (1) for restoring a tooth at least during healing of an implant construction (5) being set into a jaw of a patient, comprising
a crown abutment (3) configured to be positioned on a gingiva former (4) mounted to the implant construction (5), and
a locking member (2) having a contact face (212) and a fixing structure (24) configured to be fixed to the gingiva former (4), wherein
the crown abutment (3) has a through hole (31) configured to receive the locking member (2) such that the contact face (212) of the locking member (2) contacts the crown abutment (3) and the fixing structure (24) at least partially extends out of the crown abutment (3), and
the crown abutment (3) is made of an abutment material configured to bond with a crown material used to build a crown (6).

2. The dental restoration system (1) of the preceding claim, comprising a pin (102), wherein the pin (102) has a fixing structure (124) corresponding to the fixing structure (24) of the locking member (2), and the pin (102) is configured to extend through the through hole (31) of the crown abutment (3) and to project above the crown abutment (3) when the crown abutment (3) is positioned on the gingiva former (4) and the fixing structure (124) of the pin (102) engages the gingiva former (4).

3. The dental restoration system (1) of the preceding claim, wherein the pin (102) is made of a pin material configured not to bond with the crown material used to build the crown (6).

4. The dental restoration system (1) of the preceding claim, comprising the crown material to build-up the crown (6), wherein the pin material is configured not to bond with the crown material and the abutment material is configured to bond with the crown material when building the crown (6).

5. The dental restoration system (1) of the preceding claim, wherein the crown material is a composite material and, preferably, a resin-based composite material.

6. The dental restoration system (1) of any one of the preceding claims, wherein the locking member (2) has a breaking structure (22) configured to break upon a predefined threshold load applied to the crown abutment (3) when the locking member (2) fixes the crown abutment (3) to the gingiva former (4).

7. The dental restoration system (1) of the preceding claim, wherein the locking member (2) has a mounting tool geometry (211) configured to be connected to a mounting tool for fixing the locking member (2) to the gingiva former (4), the mounting tool geometry (211) is located on a first side of the breaking structure (22), the locking member (2) has an auxiliary tool geometry (23) configured to be connected to a demounting tool for demounting the locking member (2) from the gingiva former (4) when the breaking structure (22) is broken, and the auxiliary tool geometry (23) is located on a second side of the breaking structure (22) opposite to the first side of the breaking structure (22).

8. The dental restoration system (1) of the preceding claim, wherein the locking member (2) is arranged such that the breaking structure (22) is located apically from the mounting tool geometry (211), the auxiliary tool geometry (23) is located apically from the breaking structure (22), and the fixing structure (24) is located apically from the auxiliary tool geometry (23).

9. The dental restoration system (1) of any one of the three preceding claims, wherein the breaking structure (22) of the locking member (2) comprises a weakened section (22) having a reduced diameter compared to other sections of the locking member (2).

10. The dental restoration system (1) of any one of the four preceding claims, wherein the breaking structure (22) of the locking member (2) is made of a weaker material compared to other sections of the locking member (2).

11. The dental restoration system (1) of any one of the preceding claims, comprising a gingiva former (4) having an implant structure configured to arrange the gingiva former (4) on the implant construction (5) set into the jaw of the patient, and an emergence profile (43) portion configured to be positioned within a gingiva of the patient when the gingiva former (4) is mounted to the implant construction (5).

12. The dental restoration system (1) of the preceding claim, wherein the gingiva former (4) has a mounting structure corresponding to the fixing structure (24) of the locking member (2), the mounting structure comprising a socket having an inner thread and the fixing structure of the locking member comprising a corresponding post having an outer thread.

13. The dental restoration system (1) of the preceding two claims, whereby the gingiva former (4) at its occlusal end has a flat abutment platform (42) for supporting a body (32) of the crown abutment (3) and an indexing knob (41) which occlusally projects from the abutment platform (42), the indexing knob (41) being configured to define an orientation and location of the crown abutment (3) when being mounted to the gingiva former (4).

14. The dental restoration system (1) of the preceding three claim, whereby the emergence profile (43) comprises an anatomic shape.
